# EUROPEAN PATENT APPLICATION

(11) **EP 1 626 524 A1**
(43) Date of publication of application: **15.02.2006**
(21) Application number: 05254965.6
(22) Date of filing: 09.08.2005
(51) Int. Cl.: H04L 9/32

(54) **Method of generating a key for device authentication and apparatus using the method, and device authentication method and device authentication apparatus**

(30) Priority: 14.08.2004 KR 2004064120
(71) Applicant: Samsung Electronics Co, Ltd, Suwon-si, Gyeonggi-do (KR)
(72) Inventor: Lee, Jae-Heung, Gyeonggi-do (KR)
(74) Representative: Brandon, Paul Laurence

(57) **Abstract**

A method of generating a key for device authentication includes: generating an element vector by generating a number of elements corresponding to a size of an ID of the device; generating a subvector corresponding to a bit location at every location of the device ID at which a "1" is disposed, and generating a subvector by shifting the element vector by a number of bit positions corresponding to the location of the "1" in the device ID; and combining the subvectors generated with respect to the device. The method of generating the key is provided to perform authentication without using a public key encryption operation in a device having limited performance capabilities, for example, a mobile phone.

## Description

The present invention relates to authentication protocols, and methods of generating a key for device authentication apparatus using the method, device authentication methods, and device authentication apparatus.

Due to the introduction of distributed systems, and the use of networks and other forms of communication for delivering data between a terminal user and a computer and between computers, the need for information security has changed significantly over the past several decades. Network security is required to protect data being transmitted and guarantee reliability of the data transmission.

Authentication is a process used to prove a party's identity to another party. An authentication protocol is a protocol used to allow two participants to identify each other in a communication before the two participants exchange data.

Authentication protocols used in a wide range of applications are based on a public key encryption system. However, since public key encryption operations generally require a lot of overhead compared to other operations, they are not suitable for use in devices having a limited performance capability. Therefore, a method is required to perform authentication without using a public key encryption operation in a device having limited capabilities, such as a mobile phone.

Preferred embodiments of the present invention aim to provide a method of generating a key for device authentication and an apparatus using the method, and a device authentication method and device authentication apparatus, in which authentication can be performed without performing a public key encryption operation in a device having a limited performance capability.

According to an aspect of the present invention, there is provided a method of generating a key for device authentication, the method comprising: generating an element vector comprising random numbers corresponding to a size of an ID of the device; generating a subvector corresponding to a bit location at every location of the device ID at which a "1" is disposed, and generating a subvector by shifting the element vector by a number of bit positions corresponding to the location of the "1" in the device ID; and combining the subvectors generated with respect to the device.

The combining may comprise summing the subvectors; or performing a modulus operation.

According to another aspect of the present invention, there is provided an apparatus for generating a key for device authentication, the apparatus comprising: an element vector generator which generates an element vector by generating a certain number corresponding to a size of an ID of the device; a subvector generator which generates a subvector corresponding to a bit location at every location of the device ID at which a "1" is disposed, and generates a subvector by shifting the element vector by a number of bit positions corresponding to the location of the "1" in the device ID; and a subvector combiner which combines the subvectors generated with respect to the device.

According to still another aspect of the present invention, there is provided a device authentication method, comprising: authenticating another device using an intrinsic ID and an intrinsic key of the device, wherein formation of the intrinsic key of the device comprises: generating an element vector comprising random numbers corresponding to a size of an ID of the device; generating a subvector corresponding to a bit location at every location of the device ID at which a "1" is disposed, and generating a sebvector by shifting the element vector by a number of bit positions corresponding to the location of the "1" in the device ID; and combining the subvectors generated with respect to the device.

According to yet another aspect of the present invention, there is provided a device authentication apparatus comprising: an authenticator which authenticates another device using an intrinsic ID and an intrinsic key of the device, wherein formation of the intrinsic key of the device comprising: generating an element vector comprising random numbers corresponding to a size of an ID of the device; generating a subvector corresponding to a bit location at every location of the device ID at which a "1" is disposed, and generating a sebvector by shifting the element vector by a number of bit positions corresponding to the location of the "1" in the device ID; and combining the subvectors generated with respect to the device.

Further features of the present invention are set out in the appended claims.

The present invention will become more apparent by describing in detail exemplary embodiments thereof with reference to the attached drawings in which:
FIG. 1 is a configuration view schematically illustrating an authentication system according to an exemplary embodiment of the present invention;
FIG. 2 is a block diagram schematically illustrating a key generating apparatus according to an exemplary embodiment of the present invention;
FIG. 3 is a reference view describing a method of generating a key according to an exemplary embodiment of the present invention;
FIG. 4 is an example of a method of generating a key according to an exemplary embodiment of the present invention;
FIG. 5 is a flow chart describing a method of generating a key according to an exemplary embodiment of the present invention;
FIG. 6 is a block diagram schematically illustrating an authentication apparatus 600 called Device A, which authenticates another authentication apparatus called Device B as shown in FIG. 1;
FIG. 7 is a flow chart describing an authentication method in which Device A authenticates Device B using a key generated according to an exemplary embodiment of the present invention; and
FIG. 8 is a flow chart describing an authentication method used by Device A, in which Device A and Device B authenticate each other using a key generated according to an exemplary embodiment of the present invention.

The present invention will now be described more fully with reference to the accompanying drawings, in which exemplary embodiments of the present invention are shown.

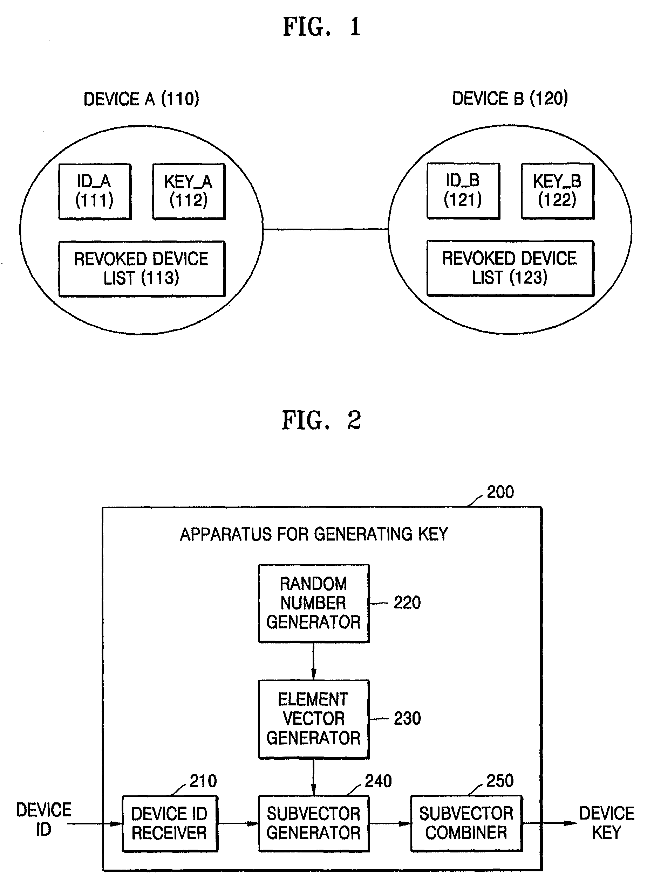

FIG. 1 is a configuration view schematically illustrating an authentication system according to an exemplary embodiment of the present invention. Referring to FIG. 1, Device A 110 comprises an intrinsic ID ID_A 111, a key Key_A 112, and a revoked device list 113. Similarly, Device B 120 comprises an intrinsic ID ID_B 121, a key Key_B 122, and a revoked device list 123.

The ID_A 111 and the Key_A 112 denote an intrinsic ID and key, respectively, of the Device A 110, and the ID_B 121 and the Key_B 122 denote an intrinsic ID and key, respectively, of the Device B 120. A revoked device list is a list of devices whose key has been compromised (e.g., hacked) and is not valid any more. The revoked device list is included in a device, for example, when it is manufactured or communicates with another device or media. Since how to actually manage the revoked device list is beyond the scope of the present invention, a detailed description thereof is omitted. Instead, how to use the revoked device list is described below. A key is composed of a predetermined number of subkeys which are vector-shaped. The vector has the same size in bits as that of a device ID. For example, if a device ID is made up of 32 bits, the size of a vector is also 32 bits. The key value of each device is set so that the inner product (IP) value of Key_A and ID_B is equal to the inner product value of Key _Band ID_A with respect to Devices A and B (if a device ID is regarded as a bit vector rather than a bit string).

For example, when a device ID is made up of five bits, ID_A is 10110, and ID_B is 01011, Key_A = (100, 200, 300, 400, 500), and Key_B = (200, 300, 400, 500, 100).

Therefore, IP (Key_A, ID_B) = 100*0 + 200*1 + 300*0 + 400*1 + 500*1 = 1100, and IP (Key_B, ID_A) = 200*1 + 300*0 + 400*1 + 500*1 + 100*0 = 1100.

In order to satisfy the above properties, a method of generating a key is described.

FIG. 2 is a block diagram schematically illustrating a key generating apparatus according to an exemplary embodiment of the present invention. Referring to FIG. 2, the key generating apparatus 200 comprises a device ID receiver 210, a random number generator 220, an element vector generator 230, a subvector generator 240, and a subvector combiner 250.

The device ID receiver 210 receives, from a source outside the apparatus, an n-bit sized ID of a device for which a key is to be generated and outputs the ID to the subvector generator 240. Furthermore, a device ID may be generated inside the key generating apparatus 200.

The random number generator 220 generates n random numbers each having a size corresponding to the size of a device ID and outputs them to the element vector generator 230.

The element vector generator 230 receives the n random numbers from the random number generator 220, converts them into an element vector, and outputs the element vector to the subvector generator 240. For example, if the element vector generator 230 receives n random numbers, e_1, e_2, e_3, ..., e_n-2, e_n-1, e_n, from the random number generator 220, the element vector generator 230 generates an element vector, {e_1, e_2, e_3, ..., e_n-2, e_n-1, e_n}, containing the random numbers as elements.

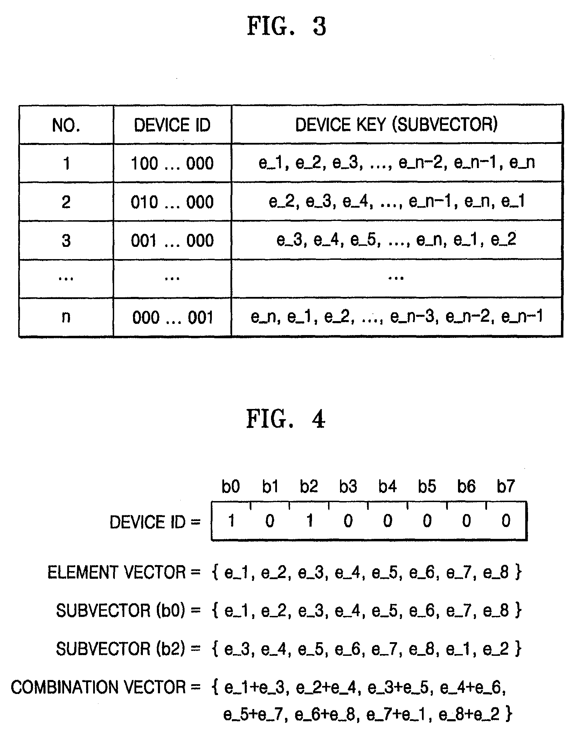

The subvector generator 240 generates a subvector using the element vector received from the element vector generator 230 and a device ID received from the device ID receiver 210. To be specific, the subvector generator 240 generates a subvector corresponding to a bit location at every bit location of the device ID at which a 1 is disposed. For example, if m Is are disposed in the device ID, m subvectors are generated. A subvector is generated by shifting the element vector by a number of bit positions corresponding to the location of a 1 in the device ID. For example, referring to FIG. 3, if a 1 is disposed at the Oth location in the device ID, an element vector is shifted by 0. As a result, the subvector becomes an original element vector, {e_1, e_2, e_3, ..., e_n-2, e_n-1, e_n}, which is not shifted. If a 1 is disposed at the 1st location in a device ID, an element vector is shifted to the left by 1 such that the subvector becomes {e_2, e_3, ..., e_n-2, e_n-1, e_n, e_1}.

The subvector combiner 250 receives subvectors generated in the subvector generator 240, sums the subvectors, and outputs the summed combination vector as a key. Here, a summation operation (+) may be a general summation; however, it may also be used like a modulus operation. For example, when the size of each of two elements is 64 bits and the summation of the two elements exceeds 64 bits, mod 2^64 is applied to use only the least significant 64 bits of the summation result.

For example, as shown in FIG. 3, when only one 1 is disposed in a device ID, only one subvector is generated. Accordingly, the subvector combiner 250 may output one subvector as the generated key. The operation of the subvector combiner 250 is summarized by the following pseudocode.

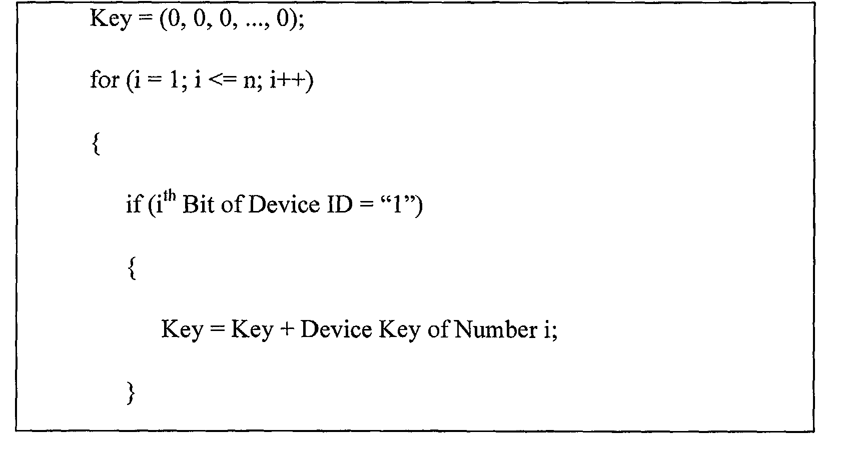

Referring to FIG. 4, an example of a method of generating a key according to an exemplary embodiment of the present invention is described. For example, if a device ID is "10100000", a 1 is disposed in the Oth and the 2nd locations of the device ID. The element vector generator generates an element vector, {e_1, e_2, e_3, e_4, e_5, e_6, e_7, e_8}, from which subvector V1= {e_1, e_2, e_3, e_4, e_5, e_6, e_7, e_8}, and subvector V2= {e_3, e_4, e_5, e_6, e_7, e_8, e_1, e_2} are generated. Finally, the two subvectors V 1 and V2 are summed to make a combination vector {e_1 + e_3, e_2 + e_4, e_3 + e_5, e_4 + e_6, e_5 + e_7, e_6 + e_8, e_7 + e_1, e_8 + e_2}, which is outputted as a key.

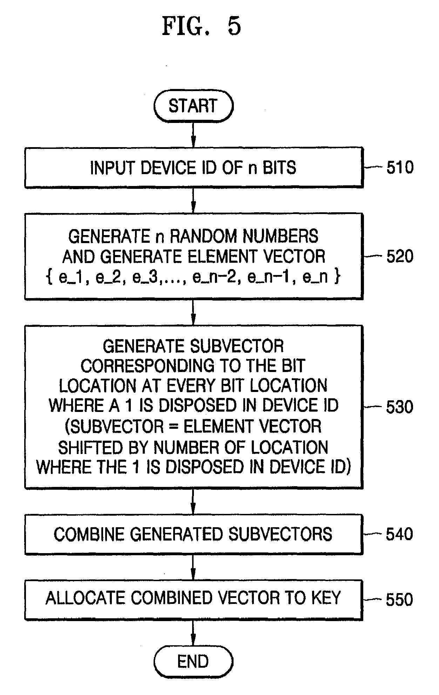

FIG. 5 is a flow chart describing a method of generating a key according to an exemplary embodiment of the present invention. First, an n-bit device ID is inputted in Operation 510. Then, n random numbers are generated and an element vector, {e_1, e_2, e_3, ..., e_n-2, e_n-1, e_n}, comprising n elements (e.g., the n random numbers) is generated in Operation 520. Here, an element vector is not generated for each device ID. Instead, an element vector is generated once and applied to every device ID to generate a key for each of the devices. A subvector corresponding to a bit location is generated for every bit location where a 1 is disposed in a device ID in Operation 530. Each subvector indicates the element vector shifted by a number of bit positions corresponding to the location of the 1 in the device ID. The generated subvectors are summed in Operation 540, and the summed vector is allocated to a key in Operation 550.

A protocol required when one device (e.g., Device A) authenticates another device (e.g., Device B) and a protocol required for mutual authentication of devices (e.g., Devices A and B) using the key generated above are described.

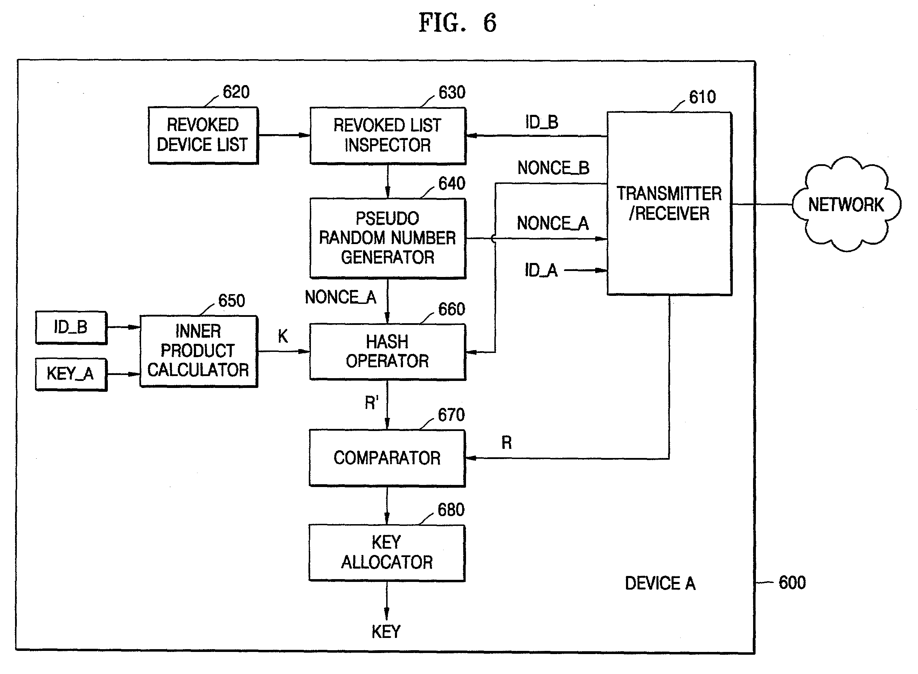

FIG. 6 is a block view schematically illustrating an authentication apparatus 600 of Device A, which authenticates another authentication apparatus Device B using a key generated according to an exemplary embodiment of the present invention. Referring to FIG. 6, authentication apparatus 600 of Device A comprises a transmitter/receiver 610, a revoked device list 620, a revoked list inspector 630, a pseudo random number generator 640, an inner product calculator 650, a hash operator 660, a comparator 670, and a key allocator 680.

The transmitter/receiver 610 transmits an ID ID_A, which is the ID of Device A, and a random value Nonce_A of Device A to Device B over a network, and receives an ID ID_B, which is the ID of Device B, a random value Nonce_B, and a value R from Device B in order to authenticate Device B, as described in more detail later.

The revoked device list 620 is a list of revoked devices. The revoked list inspector 630 inspects whether ID_B received from Device B, as a device to be authenticated, exists in the revoked device list 620.

The pseudo random number generator (PNG) 640 generates the random number value, Nonce_A and outputs it to the hash operator 660. A Nonce is a value that a protocol uses only once. After the protocol uses the Nonce once, the same value is never used again.

The inner product calculator 650 calculates the inner-product of Key_A, which is a key of Device A generated according to an exemplary embodiment of the present invention, and ID_B, which is an ID of Device B, and outputs the result K to the hash operator 660.

The hash operator 660 performs a hash operation by connecting Nonce_A received from the pseudo random number generator 640, K received from the inner product calculator 650, and Nonce_B received from Device B. A hash operation is used to obtain a hash result H by putting a value that connects Nonce_A, K, and Nonce_B in a proper hash function, e.g., MD5, SHAI (Secure Hash Algorithm), etc. The hash operator 660 sets the upper (h-k) bits of the hash result, H, to R', and outputs the R' to the comparator 670. That is, when a hash result, H, has a size of h bits, and a key has a size of k bits, the upper h-k bits of H are set to R'.

The comparator 670 compares R' received from the hash operator 660 and R received from Device B and determines whether R' is the same as R. The key allocator 680 allocates the lower k bits of the hash result H to a key when the comparator 670 determines that R' is the same as R. Specifically, the lower k bits, and not the upper h-k bits, in the hash result, H, are allocated to the key.

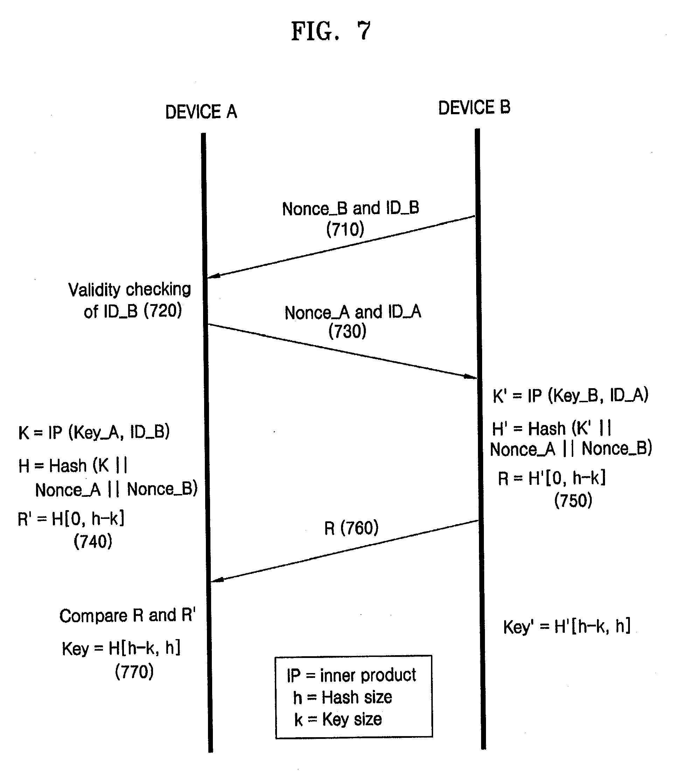

FIG. 7 is a flow chart describing an authentication method in which Device B is authenticated by the Device A shown in FIG. 6.

Device B generates a random number value Nonce_B using a pseudo random number generator (PNG), and transmits Nonce_B and its own device ID ID_B to Device A in Operation 710. Device A checks if ID_B received from Device B exists in the revoked device list, thereby checking whether Device B is revoked in Operation 720. If Device B is not revoked, Device A also generates a random number value Nonce_A using a PNG, and transmits Nonce_A and its own device ID ID_A to Device B in Operation 730.

Device A calculates an inner product K of its own key Key_A and ID_B received from Device B, and obtains a hash result H by putting a value that connects K, Nonce_A, and Nonce_B in a proper hash function. An upper (h-k) bits of H are set to R' in Operation 740.

Device B, which receives Nonce_A and ID_A, calculates an inner-product K' of its own key Key_B and ID_A received from Device A, and obtains a hash result H' by putting a value that connects K', Nonce_A, and Nonce_B in the same hash function as described above in Operation 750. An upper (h-k) bits of H' are set to R and the R value is transmitted to Device A in Operation 760.

Device A, which receives R from Device B compares R to R', and if they are the same, the lower k bits of H are allocated to a key to complete authentication successfully in Operation 770. Device B allocates the lower k bits (i.e., from the upper (h-k)th to the last hth bit) of H' to a key.

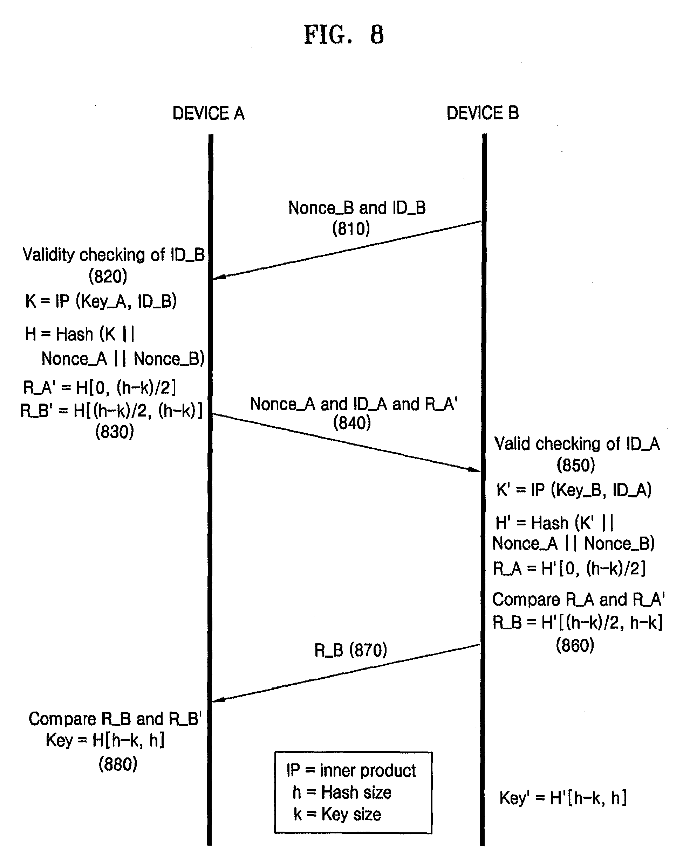

FIG. 8 is a flow chart describing an authentication method in which Device A and Device B authenticate each other using a key generated according to an exemplary embodiment of the present invention.

Device B generates a random number value Nonce_B using a PNG, and transmits Nonce_B and its own device ID ID _B to Device A in Operation 810. Device A checks if ID_B received from Device B exists in the revoked device list, thereby checking whether Device B is revoked in Operation 820. If Device B is not revoked, Device A also generates a random number value Nonce_A using a PNG, calculates the inner-product K of its own key Key_A and ID_B received from Device B, and obtains a hash result H by putting a value that connects K, Nonce_A, and Nonce_B in a proper hash function. An upper (h-k)/2 bits of H are set to R_A', and a next (h-k)/2 bits (i.e., from the upper (h-k)/2nd to the (h-k)th bit) of H are set to R_B' in Operation 830.

Device A transmits Nonce_A, ID_A, and R_A' to Device B in Operation 840. Device B checks if ID_A received from Device A exists in the revoked device list, thereby checking whether Device A is revoked in Operation 850. If Device A is not revoked, Device B calculates the inner-product K' of its own key Key_B and ID_A received from Device A, and obtains a hash result H' by putting a value that connects K', Nonce_A, and Nonce_B in the same hash function as described above. Device B sets the upper (h-k)/2 bits of H' to R_A, and compares R_A to R_A' received from Device A in Operation 860.

If R_A and R_A' are the same, Device B sets a next (h-k)/2 bits of H' to R_B in Operation 860. Then, Device B transmits R_B to Device A in Operation 870. Therefore, Device B allocates the lower k bits (i.e., from the upper (h-k)th to the last hth bit) of H' to a key'.

Device A, which receives R_B from Device B, compares R_B to R_B', and if they are the same, the lower k bits of H are allocated to a key to complete authentication successfully in Operation 880.

Embodiments of the present invention may be realized, for example, on a computer-readable recording medium as a computer-readable code. Computer-readable recording mediums include every kind of recording device that stores computer system-readable data, such as ROMs, RAMs, CD-ROMs, magnetic tapes, floppy discs, optical data storage, etc. Computer-readable recording mediums can also be realized in the form of a carrier wave (e.g., transmission through the Internet). A computer-readable recording medium may be dispersed in a network-connecting computer system, resulting in a computer-readable code being stored and executed by a dispersion method. A functional program, code and code segments, used to implement the present invention can be derived by a skilled computer programmer from the description of the invention contained herein.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in a descriptive sense only and not for purposes of limitation. Therefore, the scope of the present invention is defined not by the detailed description of the invention but by the appended claims, and variations within the scope of the present invention will be construed as being included in the present invention.

As described above, a method of generating a key is provided by preferred embodiments of the present invention to perform authentication without using a public key encryption operation in a device having limited performance capabilities, for example, a mobile phone.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of generating a key for device authentication, the method comprising:
generating an element vector comprising a plurality of random numbers each corresponding to a bit of an ID of a device;
generating a subvector for each bit of the ID having a value of 1 by shifting the element vector by a number of bit positions corresponding to a bit location of the value of 1 in the ID; and
combining the subvectors to generate the key.

2. The method of generating a key of claim 1, wherein the combining comprises at least one of summing the subvectors and performing a modulus operation.

3. An apparatus (200) for generating a key for device authentication, the apparatus comprising:
an element vector generator (230) which generates an element vector having a number of elements corresponding to a size of an ID of a device;
a subvector generator (240) which generates a subvector for each bit of the ID having a value of 1 by shifting the element vector by a number of bit positions corresponding to a bit location of the value of 1 in the ID; and
a subvector combiner (250) which combines the subvectors to generate the key.

4. The apparatus (200) for generating a key of claim 3, wherein the subvector combiner (250) combines the subvectors by at least one of summing the subvectors and performing a modulus operation.

5. The apparatus (200) for generating a key of claim 3 or claim 4, wherein the elements are random numbers.

6. A device authentication method comprising:
authenticating a second device using an intrinsic ID and an intrinsic key of a first device, wherein the intrinsic key of the first device is generated by:
generating an element vector comprising a random number for each bit of the intrinsic ID;
generating a subvector corresponding to each bit of the ID having a value of 1 by shifting the element vector by a number of bit positions corresponding to a bit location of the value of 1 in the ID; and
combining the subvectors.

7. A device authentication apparatus comprising:
an authenticator which authenticates a second device using an intrinsic ID and an intrinsic key of a first device;
an element vector generator which generates an element vector comprising a random number corresponding to each bit of the ID;
a subvector generator which generates a subvector for each bit of the ID having a value of 1 by shifting the element vector by a number of bit positions corresponding to a bit location of the value of 1 in the ID; and
a subvector combiner which combines the subvectors to generate the intrinsic key of the first device.
